# EUROPEAN PATENT SPECIFICATION

(11) **EP 2 621 859 B1**
(45) Date of publication and mention of the grant of the patent: **25.02.2015**
(21) Application number: 11773894.8
(22) Date of filing: 03.10.2011
(51) Int. Cl.: C01G 39/06, C01G 41/00

(54) **"ONE-POT" SYNTHESIS OF 2D, 1D, E 0D NANO CRYSTALS OF TUNGSTEN AND MOLYBDENUM CHALCOGENIDES (WS2,MOS2) FUNCTIONALIZED WITH LONG CHAIN AMINE AND/OR CARBOXYLIC ACID AND/OR THIOL**
ONE-POT-SYNTHESE VON MIT LANGKETTIGEM AMIN UND/ODER CARBONSÄURE UND/ODER THIOL FUNKTIONALISIERTEN 2D-, 1D- UND 0D-NANOKRISTALLEN AUS WOLFRAM- UND MOLYBDÄNCHALCOGENIDEN (WS2, MOS2)
SYNTHÈSE EN ENCEINTE UNIQUE DE NANOCRISTAUX 2D, 1D ET 0D DE CHALCOGÉNURES DE TUNGSTÈNE ET DE MOLYBDÈNE (WS2, MoS2) FONCTIONNALISÉS PAR UNE AMINE À LONGUE CHAÎNE ET/OU UN ACIDE CARBOXYLIQUE ET/OU UN THIOL

(30) Priority: 01.10.2010 IT SA20100029
(43) Date of publication of application: 07.08.2013
(73) Proprietor: Universita' Degli Studi di Salerno, 84084 Fisciano (SA) (IT)
(72) Inventor: ALTAVILLA, Claudia, I-84084 Fisciano SA (IT); CIAMBELLI, Paolo, I-84084 Fisciano SA (IT); SARNO, Maria, I-84084 Fisciano SA (IT)
(74) Representative: Germinario, Claudio
(86) International application number: PCT/IB2011/054334
(87) International publication number: WO 2012/042511

(56) References cited:
- US-A- 4 243 553
- US-A1- 2004 038 832
- X. ZHANG ET AL.: "Green synthesis of metal sulfide nanocrystals trough a general composite-surfactant aided solvothermal process", JOURNAL OF CRYSTAL GROWTH, vol. 311, 18 May 2009 (2009-05-18), pages 3775-3780, XP002640100,
- J.H. KOH ET AL.: "Properties of unsupported MoS2 species produced in the preparation of MoS2/Al2O3 using a sonochemical method", KOREAN JOURNAL OF CHEMICAL ENGINEERING, vol. 26, no. 4, 2009, pages 999-1003, XP002666760,
- ALONSO G ET AL: "WS2 catalysts from tetraalkyl thiotungstate precursors and their concurrent in situ activation during HDS of DBT", JOURNAL OF CATALYSIS, ACADEMIC PRESS, DULUTH, MN, US, vol. 221, no. 2, 25 January 2004 (2004-01-25), pages 657-661, XP004486171, ISSN: 0021-9517, DOI: DOI:10.1016/J.JCAT.2003.10.003
- ALONSO G ET AL: "Characterization and HDS Activity of Mesoporous MoS2 Catalysts Prepared by in Situ Activation of Tetraalkylammonium Thiomolybdates", JOURNAL OF CATALYSIS, ACADEMIC PRESS, DULUTH, MN, US, vol. 208, no. 2, 10 June 2002 (2002-06-10) , pages 359-369, XP004465788, ISSN: 0021-9517, DOI: DOI:10.1006/JCAT.2002.3553
- THOMAS HÃ Â 1/4 BERT ET AL: "Solâ gel-derived nanocomposite coatings filled with inorganic fullerene-like WS2", JOURNAL OF SOL-GEL SCIENCE AND TECHNOLOGY, KLUWER ACADEMIC PUBLISHERS, BO, vol. 51, no. 3, 27 January 2009 (2009-01-27), pages 295-300, XP019731910, ISSN: 1573-4846, DOI: DOI:10.1007/S10971-009-1896-3

## Description

### Field of the invention

The present invention concerns 2D,1D,0D nano crystals of tungsten and/or molybdenum chalcogenides and a one-pot chemical synthesis for their manufacture. The chalgogenides may be functionalized with long chain amines and/or long chain carboxylic acids and/or long chain thiols in the form of fluid suspension or solid paste and may find use for different applications such as lubricant additives, catalysts, cathodes in lithium non-aqueous batteries, potential electronic device. The nanocrystals obtained are made by one or few layers of crystalline metal chalcogenides completely covered by an organic coating that stabilizes the suspension, avoids aggregation and oxidation phenomena and can be easily functionalized with other molecules or nanosystems to introduce new properties to the hybrid organic-inorganic nanocomposites.

### Background of the Invention

2D nanosheet crystals such as graphene and transition-metal chalcogenides are systems having a nanoscale dimension only in the c axis. They have been emerging as important new materials thanks to their unique properties and potential applications in different fields ranging from electronics to energy, to catalysis. Recently, the interest for 2D atomic crystals of MoS₂-like materials is increased thanks to the strong photoluminescence properties arising from their monolayer form that can open new opportunities for nanophotonic applications.( Emerging Photoluminescence in Monolayer MoS2, Andrea Splendiani, Liang Sun, Yuanbo Zhang, Tianshu Li, Jonghwan Kim, Chi-Yung Chim, Giulia Galli, Feng Wang Nano Letters 2010 10 (4), 1271-1275)( Anomalous Lattice Vibrations of Single- and Few-Layer MoS₂, Changgu Lee, Hugen Yan, Louis E. Brus, Tony F. Heinz, James Hone, Sunmin Ryu, ACS Nano Article ASAP) Synthetic routes for side confined 2D crystals of MoS₂ and W S₂ are not simple because these systems are unstable and tend to scroll up into closed structures such as quasi-0D onions or 1 D tubes (Recent Progress in the Study of Inorganic Nanotubes and Fullerene-Like Structures, R. Tenne and G. Seifert, Annu. Rev. Mater. Res. 2009. 39:387-413).

The production of exfoliated sheets of MoS₂ and WS₂ is generally performed by a restacking process consisting in sonication of microsized MoS₂ or WS₂ soaked in an n-butyl lithium solution of hexane under nitrogen atmosphere. The final restacked MoS₂ product is obtained after some days, since the method requires a series of several steps. MoS₂ is, in fact, stirred in the presence of butyl-lithium for at least 48 h. The obtained LixMoS₂ is then washed time after time in organic solvent, centrifuged and immersed in water to promote the exfoliation. Strictly control of pH, filtration and drying process under vacuum is necessary to obtain the restacked product. (US Patent 4,822,590, to Morris et al.).

The intercalation chemistry of molybdenum disulfide, synthesis, structure and principal properties of the matrix, as well as the principal applications of MoS₂ and MoS₂-based intercalation compounds has been reviewed by Benavente et al. (E. Benavente, M.A. Santa Ana, F. Mendiza'bal, G. Gonza'lez Intercalation chemistry of molybdenum disulfide Coordination Chemistry Reviews 224 (2002) 87-109)

Single molecular layers of MoS₂ can be also obtained by hydrothermal processes. Generally, a distilled water solution of [(NH₄)₆Mo₇O₂₄·4H₂O]; elemental sulfur, and hydrazine is put in a Teflon-lined stainless steel autoclave and maintained at 150-180°C for 48 h, and then were cooled to room temperature.The resulting powder, filtered and washed with distilled water, dilute hydrochloric acid and ethanol, is dried in a vacuum at 40 °C for at least 3 h. (Y.Peng, Z.Meng, C.Zhong, J. Lu,W.Yu,Y. Jia, Y. Qian, Hydrothermal Synthesis and Characterization of Single-Molecular-Layer MoS2 and MoSe2 Chemistry Letters 2001, 772-773)

Recently, the synthesis of 2D WS₂ nanosheets crystals using tungsten oxide nanorods as metal precursor was proposed. The reaction mixture was first heated at 100 °C for 1 h in vacuum to remove impurities such as water, and then was heated to 250 °C. The sulfidation reaction was initiated by injecting carbon disulfide in the reaction mixture of WO₃ nanorods and hexadecylamine under nitrogen atmosphere, and the resulting solution was heated to 330 °C. (Jung-wook Seo, Young-wook Jun , Seung-won Park , Hyunsoo Nah , Taeho Moon , Byungwoo Park, Prof. , Jin-Gyu Kim, Youn Joong Kim, Dr. , Jinwoo Cheon, Prof. Two-Dimensional Nanosheet Crystals Angew. Chem. Vol. 119, 46 Pages: 8984-8987, 2007)

WS₂ nanosheets were also obtained by a mechanical activation technique, in which a mixture of WO₃ and S was ball-milled and then annealed at 600 °C for 2 h in Ar atmosphere. The temperature plays a critical role in the formation of WS₂ nanosheets, and the sulfidization reaction can only be completed at high temperature (600-700 °C). (Z.Wua, D.Wang, , X. Zana and A. Suna, Synthesis of WS2 nanosheets by a novel mechanical activation method Materials Letters, 64, 15, 856-858, 2010) Zhang et al. proposed the synthesis of single-molecular layered MoS₂ by a solvothermal method using hexadecylamine and sodium oleate as surfactants, and the use of two different chemicals to obtain the chalcogenides, in particular [(NH₄)₂Mo₇O₂₄·7H₂O] as precursor of molybdenum and thiourea as external source of sulfur. The synthesis requires the presence of a solvent (ethylene glycol) and the treatment of the mixture in a Teflon lined autoclave for 24h at 180°C.(X.Zhang et al. "Green synthesis of metal sulphide nanocrystals trough a general composite-surfactant aided solvothermal process", Journal of crystal growth, 311, 2009, 3775-3780.)

Todate it is widely accepted the importance of nanometric 1 D (tubes, wires, rods) and 0D (nanoparticles, quantum dots) structures that can be obtained with a controlled morphology by changing the experimental conditions of reaction. In particular, inorganic nano particles and nano-tubes are ideal candidates for many applications. The synthesis of inorganic fullerene-like nano particles and nanotubes are the subject of several patents and numerous publications. They are usually produced by reacting at a very high temperature (700-900° C) tungsten or molybdenum oxide powders in a reducing atmosphere (H₂/H₂S) for several hours. (*Tenne, R., Hodes, G., FeldMan, Y,. Homyonfer, M., Margulis, L., Bulk synthesis of inorganic fullerene-like structures of metal chalcogenides,* WO/1997/044278), (W. Tremel, H. Annal-Therese, *Method of producing inorganic fullerene-type nanostructures of metal disulfides, nanostructures produced thereby and use thereof*) PCT Int. Appl. **2009,** 17pp., WO 2009152999A2, 20091223 CAN 152:89000,AN 2009: 1598651, (S.,Kumar, T. Nann, Shape control of II-VI semiconductor nanomaterials Small, 2, 316 - 329, 2006)

### Objectives of the invention

The objective of this invention is the "one-pot" synthesis of 2D, 1D, 0D nano crystals of molybdenum and tungsten chalcogenides by a novel wet chemistry approach, that can be easily scaled up for industrial production, and permit to address the nanocrystals morphology by the control of reaction parameters. The product, obtained in mild conditions of temperature and at atmospheric pressure, can be directly dispersed in oil, grease or organic solvent without further modification thanks to the functional coating of long chain molecules directly introduced during the synthesis.

### Summary of the invention

In general, a thiosalt of molybdenum or tungsten, is mixed under inert atmosphere with a dispersant such as a long chain amine or a mixture of long chain amine and, or quaternary ammonium salts and, or fatty acids and/or thiols in a reactor equipped with at least a temperature programmer/controller, a heating and cooling system, a cooling fluid, a mechanical or magnetic stirrer.

### Brief description of the drawings

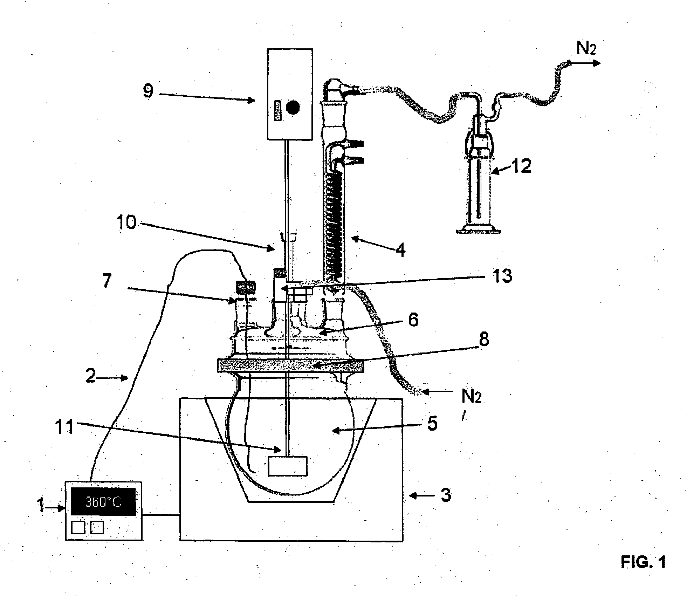

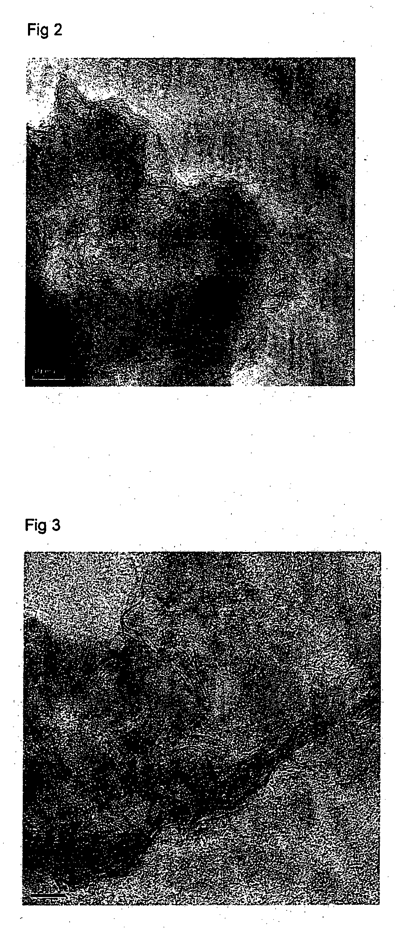

Fig 1 Scheme of reactor for the synthesis of 2D,1D,0D nano crystals of metal chalcogenides
   1)Temperature controller; 2) Thermocouple 3) Heating mantle,4) condenser 5) Spherical Reaction Vessel (50ml-50L) 6) reaction Vessel Lid, 5-Neck, 7) Adapter for thermocouple 8) Clamp for Reaction Flange and Lid 9) Mechanic stirrer head 10) Stirrer Bearing 11) Stirring Shaft 12) Trap 13) Valve to N₂ flow or vacuum
Fig 2. TEM image of 2D nano crystals of MoS₂@oleylamine
Fig 3. TEM image of 2D nano crystals of WS₂@ oleylamine

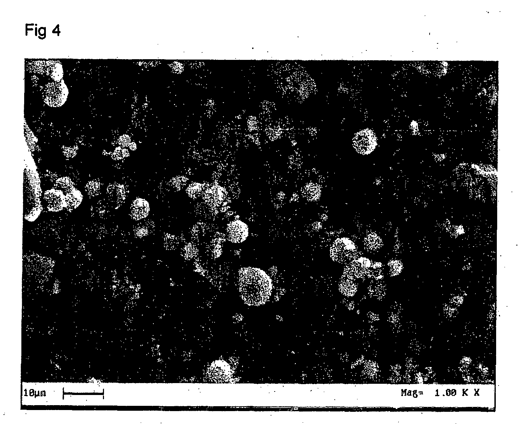

Fig 4. FE-SEM image and corresponding EDX maps of MoS₂@oleylamine 0D crystals

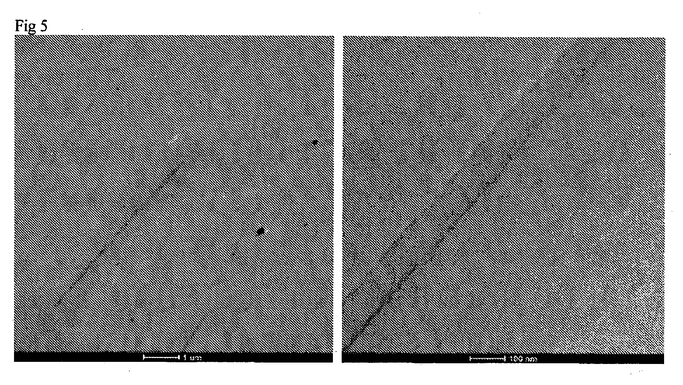

Fig 5. TEM image of 1D nano crystals of WS₂@ oleylamine

In particular the used amine shows general formula RNH₂ o R₂NH, in which R is an C₈₋₂₀ alkyl group, quaternary ammonium salts show general formula R₃NH₄⁺, where R represents a C₈₋₂₀ alkyl group, fatty acids of general formula RCOOH, where R is an alkyl group, thiols general formula RSH, where R is C₈₋₂₀ an alkyl group. Preferably said amines of general formula RNH₂, are chosen in the class formed by oleylamine, octyl amine, octadecylamine, hexadecyl amine, dodecyl amine, tetradecyl amine, and their mixtures. Preferably, said general formula RCOOH fatty acids are selected in the class consisting of oleic acid, lauric acid, stearic acid, undecanoic acid, palmitic acid, palmitoleic acid, their salts and mixtures. Preferably, said thiol of general formula RSH is selected in the class consisting of dodecanthiol, octanthiol, or thiols with two functional groups such as thioalchols or dithiols. The mixing of the thiotungstate or thiomolybdate with one or more dispersant compounds X is carried out in such a way that a ratio 1 mmole of thiotungstate or a thiomolybdate to 1 - 50 ml of X, said compound X, is set.

The precursor decomposition occurs in the temperature range of 50-400°C and results in the formation of:
- 2D nanocrystals. The reaction mixture at the beginning is maintained under mild agitation at a temperature between 50 and 120 °C for 10-60 min; then it is heated to 250-400°C in order to thermally decompose the precursor under mild stirring. The product remains dispersed in all non-polar organic solvents for a long time
- 1D nanocrystals of WS₂@X and/or MoS₂@X. Thermal decomposition is achieved by vigorous mechanical stirring, and the initial ratio between the compound X and the thiomolybdate and/or thiotungstate ranges from 80 to 180 ml (density of 0.6 and 1.2 g/ml) per 0.1 mol of salt and the decomposition is carried out in the temperature range 250-400°C,
- 0D nanocrystals. Thermal decomposition under vacuum occurs from 250 to 400°C, after removing the excess of dispersant X. The latter is easily removed by precipitating with ethanol and following centrifugation, resulting in the formation of a black greasy paste.

The international nomenclature "2D, 1D, and 0D morphology" has been used in the description of the present invention. Specifically, 2D morphology refers to nanosheets (two non nanometric dimension), 1 D morphology refers to nanorods, nanowires, nanotubes (one non nanometric dimensions), 0D morphology refers to nanospheres (no non nanometric dimensions). Moreover, @X indicates the molecule or the molecules forming the organic coating of the nanocrystal in the nomenclature WS₂@X or MoS₂@X.

### Advantages of the invention

- It's not required the use of danger and toxic gas such as H₂S of H₂
- It's not required the use of toxic solvents
- The reaction is carried out under inert atmosphere
- Low reaction time
- Low reaction temperature (max 400°C)
- High yield of conversion
- High purity of product
- Stable suspension in non-polar organic solvent
- Easy and effective dispersability in lubricant base oils matrix without the addition of dispersant agents
- A diluted dispersion of product can be used to prepare nanocoating of WS₂ or MoS₂ by self assembly technique on metal substrates.
- Easy scaling up of the apparatus for the production of large quantities of nanocrystals 2D, 1 D, 0D of Mo/W chalcogenides

Further objects of the invention are the use of tungsten and molybdenum chalcogenides nanocrystals according to the present invention
- to coat metallic surfaces of Au, Ag, Cu, Fe, steel by dipping a metallic substrate in an apolar organic solvent dispersion of nanosheets through self-assembly techniques,
- in the formulation of lubricant oils to reduce the friction coefficient and wear without the use of dispersant agent to stabilize the oil formulation
- in the formulation of lubricant greases to reduce the friction coefficient and wear without the use of dispersant agents to stabilize the grease formulation

### Example 1 Synthesis of WS₂@X (X= oleylamine) 2D nanocrystals

4 mmol (1,4493 g) of (NH₄)₂WS₄ was dispersed under inert atmosphere and magnetic stirring in 40 ml of oleylamine at 110°C for 30 min. The temperature was increased at 365°C and maintained at this value for 90 min. Then the system was cooled to room temperature. The product was a black dense oil. The excess of dispersant was removed by precipitation with ethanol and by centrifuge to obtain a paste. The sample was analyzed by XRD and TEM and the results confirmed the formation of WS₂@X nanosheets crystals.

### Example 2 Synthesis of 1 D and 2D crystals of WS₂@X (X= oleylamine, oleic acid)

1mmol of (NH₄)₄WS₄ were dispersed in 5ml of oleic acid and 3.5ml of oleylamine under inert atmosphere and magnetic stirring. The system was rapidly heated (10°C/min heating rate) to 365°C. After 10min at this temperature the reactor was cooled down to room temperature. A portion of this dispersion was washed several times in ethanol, centrifuged and dispersed in decane. The TEM showed the formation of nanosheets and some nanorods.

### Example 3 Synthesis of 1D nanocrystals of WS₂@X (X= oleylamine)

0.07 mol di (NH₄)₄WS₄ were dispersed in 150ml of oleylamine under inert atmosphere and mechanical stirring. The system was rapidly heated to 365°C (20°C/min heating rate) and manitained at this temperature for 30 min. The system was cooled down to room temperature. A portion of this paste was washed several time in ethanol, centrifuged and dispersed in decane. The TEM images showed the formation of 1D nano crystals and XRD confirmed the formation of WS₂ phase.

### Example 4 Synthesis of 2D MoS₂@X nanocrystals (X= oleylamine)

2 mmol of (NH₄)₂MoS₄, were dispersed under inert atmosphere in 80 ml of oleylamine for 15 min at 100°C. The temperature was then increased to 365 °C and maintained at this value for 30 minutes. Then the system was cooled down to room temperature. The product is a black oil. A portion of this dispersion was washed several times in ethanol, centrifuged and dispersed in hexane. TEM and XRD analyses confirmed the formation of MoS₂ 2D nano crystals.

### Example 5. Synthesis of 2D MoS₂@X nanocrystals (X= oleylamine, oleic acid)

2,4 mmol of (NH₄)₂MoS₄ were dispersed under inert atmosphere in 3.5 ml of oleylamine and 5 ml of oleic acid for 30 min at 70°C. The temperature was then increased to 350°C and maintained at this value for 30 minutes. Then the system was cooled down to room temperature. The product was a black oil. A portion of this dispersion was washed several times in ethanol, centrifuged and dispersed in hexane. TEM and XRD confirmed the formation of MoS₂ nanosheets crystals.

### Example 6. Synthesis of OD MoS₂@X (X= oleylamine) micro and nano crystals

10 mmol of (NH₄)₂MoS₄ were dispersed in 100 ml of distilled H₂O and added to 10 ml of oleylamine salified with HCl under stirring for 15 min at 50°C. The product, collected after centrifugation, was transferred to a flask and dried under vacuum (15 mm Hg) for 15 min a 50°C. The flask was heated to 360 °C and maintained under vacuum at this temperature for 90 min. The product is a black powder. The FE-SEM and EDX analysis showed the formation of nano and micro spheres of MoS₂

### Example 7. Synthesis of MoS₂@X micro tubes by annealing of MoS₂@X nanosheets (X= oleylamine).

0.3 g of WS₂@X (X= oleylamine) nanosheets synthetized in the Example n°4 were annealed at 800°C in N₂ flow for 60 min. The FE-SEM analysis showed micrometric tubes.

### Example 8. Synthesis of 2D WS₂@X nanocrystals (X= oleylamine) in lubricant base oil

10mmol (NH₄)₂WS₄ were dispersed in 10 ml of oleylamine and 20 ml of lubricant oil (synthetic, mineral or semi-synthetic) and stirred under inert atmosphere at 100°C for 30 min. Then the temperature was increased to 320 °C for 30 min. The reactor was cooled down to room temperature and the product was washed with ethanol and centrifuged. Both XRD and TEM analysis showed the formation of WS₂@X (X= oleylamine) nanosheet crystals.

## Claims

1. Process for the "one-pot" synthesis of tungsten and molybdenum chalcogenides nanocrystals with 2D. 1 D, and 0D morphologies including the following operations:
a) mixing a thiotungstate or a thiomolybdate with one or more dispersant compounds X, in the ratio of 1 mmole of thiotungstate or a thiomolybdate to 1 - 50 ml of X, said compound X being selected from the class formed by:
i) amines of general formula RNH₂₀ R₂NH, in which R is an C₆₋₂₀ alkyl group
ii) quaternary ammonium salts of general formula R₃NH₄⁺, where R represents a C₆₋₂₀ alkyl group,
iii) fatty acids of general formula RCOOH, where R is an alkyl group, thiols general formula RSH, where R is C₈₋₂₀ an alkyl group,
thereby obtaining a precursor of thiotungstate@X, or thiomolybdate@X formula
b) thermally decomposing the said precursor at temperatures of 50 - 400 °C
c) adding a solvent to the mixture in order to remove the compound X in excess
d) obtaining nanocrystals of tungsten and molybdenum chalcogenides with 1D, 2D and 0D morphologies

2. Process according to claim 1, wherein said amines of general formula RNH₂ are chosen in the class formed by oleylamine, octylamine, octadecylamine, hexadecyl amine, dodecylamine, tetradecylamine, and their mixtures.

3. Process according to at least one of the precedent claims, wherein said general formula RCOOH fatty acids are selected in the class consisting of oleic acid, lauric acid, stearic acid, undecanoic acid, palmitic acid, palmitoleic acid, their salts and mixtures.

4. Process according to at least one of the precedent claims, wherein said thiols of general formula RSH are selected in the class consisting of dodecanthiol, octanthiol, or thiols with two functional groups, such as thioalchols or dithiols.

5. Process according to at least one of the precedent claims, in which the thiotungstate or thiomolybdate counterion may be inorganic or organic such as alkali ions, ammonium or protonated amines such for examples sodium thiotungstate, ammonium or amino thiotungstate, sodium thiomolybdate, ammonium or aminothiomolybdate.

6. Process according to claims 1 to 5 for the synthesis of 1D nano crystals of WS₂@X and MoS₂@X, in which the thermal decomposition of the precursor is obtained by vigorous mechanical agitation and the initial ratio between these compounds X and thiomolybdate or thiotungstate is between 80 - 280 ml (density d = 0.6 and 1.2g/ ml) per 0.1 mol of salt and the decomposition is carried out at a temperature of 250-400° C, preferably 350 to 380 °C, more preferably at 360 -370° C.

7. 1 D nano crystals of WS₂@X and /or MoS₂@X obtainable from the process as claimed in claim 6.

8. 1D nano crystals of WS₂@oleylamine and/or MoS₂@leylamine according to claim 7

9. Process according to at least one of the claims 1 to 5 for the synthesis of 0D nano-and micro-crystals of WS₂@X and/or MoS₂@X, where the thermal decomposition of the precursor is carried out at temperatures between 250-400°C under vacuum for a period between 30 minutes and 10 hours after removal of dispersant in excess.

10. 0D nano and micro crystals of WS₂@X and or MoS₂@X obtainable from the process as claimed in claim 9.

11. 0D nano and micro crystals of WS₂@oleylamine and/or MoS₂@leylamine according to claim10.

12. Process according to at least one of claims 1 to 5 for the synthesis of 2D nanocrystals of WS₂@X and/or MoS₂@X, where the initial ratio between the X compounds and thiomolybdate or thiotungstate is in the range of 1-50 ml (density d= 0.6 and 1.2 g/ml) per mmol of salt comprising:
a) heating under stirring at temperatures between 50 and 120 °C to disperse said thiomolybdate or thiotungstate in said compound X for a period of time between 10-60 minutes and
b) decomposition at temperatures between 250-400 °C for a period of between 10-100 minutes under gentle magnetic or mechanical stirring.

13. 2D nanocrystals of WS₂@X and or MoS₂@X obtainable from the process of claim 12.

14. 2D nanocrystals of WS₂@oleylamine and /or MoS₂@oleylamine according to claim 13.

15. Process according to claim 12 for the production of 1D tubular structure wherein the 2D nanocrystals obtained are heated under inert atmosphere at temperatures between 700-1000 °C for times ranging between 30-120 minutes.

16. 1 D nano-tubular structures obtainable from the process as claimed in claim 15.

17. Use of tungsten and molybdenum chalcogenides nanocrystals with 2D, 1D, and 0D morphologies obtained from at least one of the claims 7, 8, 10, 11, 13, 14 and, or 16 to coat metallic surfaces of Au, Ag, Cu, Fe, steel by dipping of metallic substrate in an apolar organic solvent dispersion of nanosheets through self-assembly techniques.

18. Use of tungsten and molybdenum chalcogenides nanocrystals with 2D, 1D, and 0D morphologies obtained from at least one of the claims 7, 8, 10, 11, 13, 14 and, or 16 in the composition of lubricant oils to reduce the friction coefficient without the use of dispersant agent to stabilize the oil formulation.

19. Use of tungsten and molybdenum chalcogenides nanocrystals with 2D, 1D, and 0D morphologies obtained from at least one of the claims 7, 8, 10, 11, 13, 14 and, or 16 to obtain a lubricant grease with organic - inorganic hybrid nano chalcogenides additives to reduce the friction coefficient and wear without the use of dispersant agents to stabilize the grease formulation.

## Patentansprüche

1. Ein Verfahren zur Ein-Topf-Synthese von Wolfram- und Molybdän-Chalcogenid-Nanokristallen mit 2D, 1D und 0D Morphologien, das die folgenden Operationen enthält:
a) Mischen eines Thiowolframats oder eines Thiomolybdats mit einem oder mehreren Dispergierungsverbindungen X, im Verhältnis von 1 mmol Thiowolframat oder Thiomolybdat zu 1 bis 50 ml von X, wobei die Verbindung X ausgewählt ist aus der Klasse bestehend aus:
i) Aminen der allgemeinen Formel RNH₂ oder R₂NH, in denen R ein C₈₋₂₀ Alkylrest ist,
ii) quaternären Ammoniumsalzen der allgemeinen Formel R₃NH₄⁺, wobei R einen C₈₋₂₀ Alkylrest darstellt,
iii) Fettsäuren der allgemeinen Formel RCOOH, wobei R ein Alkylrest ist, Thiolen der allgemeinen Formel RSH, wobei R ein C₈₋₂₀ Alkylrest ist,
wodurch eine Vorstufe der Formel Thiowolframat@X oder Thiomolybdat@X erhalten wird,
b) thermisches Zersetzen der Vorstufe bei Temperaturen von 50 bis 400 °C,
c) Zugeben eines Lösungsmittels zu dem Gemisch, um die überschüssige Verbindung X zu entfernen, und
d) Erhalten von Nanokristallen von Wolfram- und Molybdän-Chalcogeniden mit 1D, 2D und 0D Morphologien.

2. Verfahren gemäß Anspruch 1, wobei die Amine der allgemeinen Formel RNH₂ aus der Klasse bestehend aus Oleylamin, Octylamin, Octadecylamin, Hexadecylamin, Dodecylamin, Tetradecylamin und deren Gemischen ausgewählt sind.

3. Verfahren gemäß mindestens einem der vorangehenden Ansprüche, wobei die Fettsäuren der allgemeinen Formel RCOOH aus der Klasse bestehend aus Ölsäure, Laurinsäure, Stearinsäure, Undecansäure, Palmitinsäure, Palmitoleinsäure, deren Salzen und Gemischen ausgewählt sind.

4. Verfahren gemäß mindestens einem der vorangehenden Ansprüche, wobei die Thiole der allgemeinen Formel RSH aus der Klasse bestehend aus Dodecanthiol, Octanthiol oder Thiolen mit zwei funktionellen Gruppen, wie Thioalkoholen oder Dithiolen ausgewählt sind.

5. Verfahren gemäß mindestens einem der vorangehenden Ansprüche, bei dem das Gegenion des Thiowolframats oder Thiomolybdats anorganisch oder organisch sein kann, wie Alkaliionen, Ammonium oder protonierte Amine, wie zum Beispiel Natriumthiowolframat, Ammonium- oder Aminothiowolframat, Natriumthiomolybdat, Ammonium- oder Aminothiomolybdat.

6. Verfahren gemäß Ansprüchen 1 bis 5 zur Synthese von ID-Nanokristallen von WS₂@X und MoS₂@X, in denen die thermische Zersetzung der Vorstufe durch heftige mechanische Bewegung erreicht wird und das anfängliche Verhältnis zwischen diesen Verbindungen X und Thiomolybdat oder Thiowolframat zwischen 80 und 280 ml (Dichte d = 0,6 und 1,2 g/ml) pro 0,1 Mol Salz beträgt und die Zersetzung bei einer Temperatur von 250 bis 400 °C, vorzugsweise 350 bis 380 °C, besonders bevorzugt bei 360 bis 370 °C durchgeführt wird.

7. 1D-Nanokristalle von WS₂@X und/oder MoS₂@X, die durch das Verfahren gemäß Anspruch 6 erhältlich sind.

8. 1D-Nanokristalle von WS₂@Oleylamin und/oder MoS₂@Oleylamin gemäß Anspruch 7.

9. Verfahren gemäß mindestens einem der Ansprüche 1 bis 5 zur Synthese von 0D-Nano- und Mikrokristallen von WS₂@X und/oder MoS₂@X, wobei die thermische Zersetzung der Vorstufe bei Temperaturen zwischen 250-400 °C unter Vakuum für einen Zeitraum zwischen 30 Minuten und 10 Stunden nach der Entfernung des überschüssigen Dispergiermittels durchgeführt wird.

10. 0D-Nano- und Mikrokristalle von WS₂@X und/oder MoS₂@X, erhältlich durch das Verfahren gemäß Anspruch 9.

11. 0D-Nano- und Mikrokristalle von WS₂@Oleylamin und/oder MoS₂@Oleylamin gemäß Anspruch 10.

12. Verfahren gemäß mindestens einem der Ansprüche 1 bis 5 zur Synthese von 2D-Nanokristallen von WS₂@X und/oder MoS₂@X, wobei das anfängliche Verhältnis zwischen den Verbindungen X und Thiomolybdat oder Thiowolframat im Bereich von 1 bis 50 ml (Dichte d = 0,6 und 1,2 g/ml) pro mmol Salz liegt, umfassend:
a) Erwärmen unter Rühren bei Temperaturen zwischen 50 und 120 °C für eine Zeitspanne zwischen 10-60 Minuten, um das Thiomolybdat oder Thiowolframat in der Verbindung X zu dispergieren, und
b) Zersetzung bei Temperaturen zwischen 250-400 °C für einen Zeitraum zwischen 10-100 Minuten unter leichtem magnetischen oder mechanischen Rühren.

13. 2D-Nanokristalle von WS₂@X und/oder MoS₂@X, die durch das Verfahren nach Anspruch 12 erhältlich sind.

14. 2D-Nanokristalle von WS₂@Oleylamin und/oder MoS₂@Oleylamin gemäß Anspruch 13.

15. Verfahren gemäß Anspruch 12 zur Herstellung einer 1D röhrenförmigen Struktur, wobei die erhaltenen 2D-Nanokristalle unter inerter Atmosphäre bei Temperaturen zwischen 700-1000 °C für Zeiten im Bereich zwischen 30-120 Minuten erwärmt werden.

16. 1D-Nanoröhrenstrukturen, die durch das Verfahren gemäß Anspruch 15 erhältlich sind.

17. Verwendung von Wolfram- und Molybdän-Chalcogenid-Nanokristallen mit 2D, 1D und 0D Morphologien, die durch mindestens einen der Ansprüche 7, 8, 10, 11, 13, 14 und/oder 16 erhalten wurden, zur Beschichtung von metallischen Oberflächen von Au, Ag, Cu, Fe oder Stahl durch Eintauchen eines metallischen Substrats in eine Dispersion von Nanoschichten in einem apolaren organischen Lösungsmittel durch Self-Assembly-Techniken.

18. Verwendung von Wolfram- und Molybdän-Chalcogenid-Nanokristallen mit 2D, 1D und 0D Morphologien, die durch mindestens einen der Ansprüche 7, 8, 10, 11, 13, 14 und/oder 16 erhalten wurden, in der Zusammensetzung von Schmierölen, um den Reibungskoeffizienten ohne die Verwendung eines Dispergierungsmittels zur Stabilisierung der Ölzubereitung zu verringern.

19. Verwendung von Wolfram- und Molybdän-Chalcogenid-Nanokristallen mit 2D, 1D und 0D Morphologien, die durch mindestens einen der Ansprüche 7, 8, 10, 11, 13, 14 und/oder 16 erhalten wurden, um ein Schmierfett mit organisch-anorganischen Hybrid-Nanochalcogenidadditiven zu erhalten, um den Reibungskoeffizienten und den Verschleiß ohne die Verwendung von Dispergierungsmitteln zur Stabilisierung der Fettzubereitung zu reduzieren.

## Revendications

1. Procédé de synthèse « en un seul récipient » de nanocristaux de chalcogénures de tungstène ou de molybdène de morphologies 2D, 1D et 0D, comportant les opérations suivantes :
a) mélanger un thiotungstate ou un thiomolybdate avec un ou plusieurs composé(s) dispersant(s) X, en une proportion de 1 millimole de thiotungstate ou de thiomolybdate pour 1 à 50 mL de composé(s) X, lequel ou lesquels composé(s) X est ou sont choisi(s) dans l'ensemble formé par les suivants :
i) les amines de formule générale RNH₂ ou R₂NH où R représente un groupe alkyle en C₈₋₂₀,
ii) les sels d'ammonium quaternaire de formule générale R₃NH₄⁺ où R représente un groupe alkyle en C₈₋₂₀,
iii) les acides gras de formule générale RCOOH où R représente un groupe alkyle, et les thiols de formule générale RSH où R représente un groupe alkyle en C₈₋₂₀,
ce qui permet d'obtenir un composé précurseur de formule thiotungstate@X ou thiomolybdate@X,
b) décomposer ledit précurseur par chauffage, à des températures de 50 à 400 °C,
c) ajouter un solvant au mélange, afin d'en éliminer l'excès de composé X,
d) et récupérer les nanocristaux de chalcogénures de tungstène ou de molybdène de morphologies 2D, 1D et 0D.

2. Procédé conforme à la revendication 1, dans lequel lesdites amines de formule générale RNH₂ sont choisies dans l'ensemble formé par les suivantes : oléylamine, octylamine, octadécylamine, hexadécylamine, dodécylamine et tétradécylamine, et leurs mélanges.

3. Procédé conforme à au moins l'une des revendications précédentes, dans lequel lesdits acides gras de formule générale RCOOH sont choisis dans l'ensemble formé par les suivants : acide oléique, acide laurique, acide stéarique, acide undécanoïque, acide palmitique et acide palmitoléique, leurs sels, et leurs mélanges.

4. Procédé conforme à au moins l'une des revendications précédentes, dans lequel lesdits thiols de formule générale RSH sont choisis dans l'ensemble formé par les suivants : dodécanethiol, octanethiol, et thiols dotés de deux groupes fonctionnels comme les dithiols et les alcool-thiols.

5. Procédé conforme à au moins l'une des revendications précédentes, dans lequel le contre-ion du thiotungstate ou du thiomolybdate peut être organique ou inorganique, comme les ions de métal alcalin, l'ion ammonium et les amines protonées, comme par exemple dans les thiotungstate de sodium, thiotungstate d'ammonium, thiotungstates d'amine, thiomolybdate de sodium, thiomolybdate d'ammonium et thiomolybdates d'amine.

6. Procédé, conforme aux revendications 1 à 5, de synthèse de nanocristaux de WS₂@X et de MoS₂@X de morphologie 1D, dans lequel la décomposition thermique du précurseur est effectuée sous vigoureuse agitation mécanique, la proportion initiale entre les composés X et le thiomolybdate ou le thiotungstate vaut de 80 à 280 mL (masse volumique d de 0,6 à 1,2 g/mL) pour 0,1 mole de sel, et la décomposition est effectuée à une température de 250 à 400 °C, de préférence de 350 à 380 °C, et mieux encore de 360 à 370 °C.

7. Nanocristaux de WS₂@X et/ou de MoS₂@X de morphologie 1D, accessibles par un procédé conforme à la revendication 6.

8. Nanocristaux de WS₂@oléylamine et/ou de MoS₂@oléylamine de morphologie 1D, conformes à la revendication 7.

9. Procédé, conforme à au moins l'une revendications 1 à 5, de synthèse de nanocristaux et microcristaux de WS₂@X et/ou de MoS₂@X de morphologie 0D, dans lequel la décomposition thermique du précurseur est effectuée à une température de 250 à 400 °C, sous vide, durant un laps de temps de 30 minutes à 10 heures, et après élimination de l'excès de dispersant.

10. Nanocristaux et microcristaux de WS₂@X et/ou de MoS₂@X de morphologie 0D, accessibles par un procédé conforme à la revendication 9.

11. Nanocristaux et microcristaux de WS₂@oléylamine et/ou de MoS₂@oléylamine de morphologie 0D, conformes à la revendication 10.

12. Procédé, conforme à au moins l'une des revendications 1 à 5, de synthèse de nanocristaux de WS₂@X et/ou de MoS₂@X de morphologie 2D, dans lequel la proportion initiale entre les composés X et le thiomolybdate ou le thiotungstate vaut de 1 à 50 mL (masse volumique d de 0,6 à 1,2 g/mL) pour 1 millimole de sel, lequel procédé comporte les opérations suivantes :
a) un chauffage avec agitation à une température de 50 à 120 °C, durant un laps de temps de 10 à 60 minutes, pour disperser ledit sel thiomolybdate ou thiotungastate dans ledit composé X ;
b) et une décomposition à une température de 250 à 400 °C, durant un laps de temps de 10 à 100 minutes, sous agitation magnétique ou mécanique modérée.

13. Nanocristaux de WS₂@X et/ou de MoS₂@X de morphologie 2D, accessibles par un procédé conforme à la revendication 12.

14. Nanocristaux de WS₂@oléylamine et/ou de MoS₂@oléylamine de morphologie 2D, conformes à la revendication 13.

15. Procédé de production de structures tubulaires de morphologie 1D, dans lequel on chauffe des nanocristaux de morphologie 2D, obtenus selon un procédé conforme à la revendication 12, sous atmosphère inerte, à une température de 700 à 1000°C, durant un laps de temps de 30 à 120 minutes.

16. Structures nano-tubulaires de morphologie 1D, accessibles par un procédé conforme à la revendication 15.

17. Utilisation de nanocristaux de chalcogénures de tungstène ou de molybdène de morphologies 2D, 1D et 0D, conformes à au moins l'une des revendications 7, 8, 10, 11, 13, 14 et/ou 16, pour revêtir des surfaces métalliques d'or, d'argent, de cuivre, de fer ou d'acier, en plongeant un substrat métallique dans une dispersion de nano-feuilles dans un solvant organique apolaire, suivant des techniques d'auto-assemblage.

18. Utilisation de nanocristaux de chalcogénures de tungstène ou de molybdène de morphologies 2D, 1D et 0D, conformes à au moins l'une des revendications 7, 8, 10, 11, 13, 14 et/ou 16, dans des formulations d'huiles lubrifiantes, pour réduire le coefficient de frottement sans utiliser un agent dispersant pour stabiliser la composition d'huile.

19. Utilisation de nanocristaux de chalcogénures de tungstène ou de molybdène de morphologies 2D, 1D et 0D, conformes à au moins l'une des revendications 7, 8, 10, 11, 13, 14 et/ou 16, dans la préparation de graisses lubrifiantes contenant des adjuvants de type nanochalcogénures hybrides, organique-inorganiques, pour réduire le coefficient de frottement et l'usure sans utiliser d'agents dispersants pour stabiliser la composition de graisse.
